# EUROPEAN PATENT APPLICATION

(11) **EP 3 761 623 A1**
(43) Date of publication of application: **06.01.2021**
(21) Application number: 19761147.8
(22) Date of filing: 20.02.2019
(51) Int. Cl.: H04M 3/487

(54) **INFORMATION PROCESSING METHOD, INFORMATION PROCESSING DEVICE, AND PROGRAM**

(30) Priority: 01.03.2018 JP 2018036863
(71) Applicant: YAMAHA CORPORATION, Hamamatsu-shi Shizuoka, 430-8650 (JP)
(72) Inventor: SETO, Yuki, Hamamatsu-shi, Shizuoka 430-8650 (JP)
(74) Representative: Hoffmann Eitle
(86) International application number: PCT/JP2019/006326
(87) International publication number: WO 2019/167756

(57) **Abstract**

An information processing apparatus includes a communication controller configured to cause a communicator to receive, from each of a plurality of terminal apparatuses, a piece of voice information indicative of a sound that is output by a sound outputter and received by each terminal apparatus, and a storage controller configured to store in a storage device pieces of voice information, each piece being received from a corresponding terminal apparatus.

## Description

### TECHNICAL FIELD

The present invention relates to a technique for processing information.

### BACKGROUND ART

Various techniques for processing information collected by terminal apparatuses have been conventionally proposed. For example, Patent Document 1 discloses a configuration in which identification information is transmitted to terminal apparatuses by sound communication, and the terminal apparatuses output related information corresponding to the identification information.

### Related Art Document

### Patent Document

[Patent Document 1] Japanese Patent Application Laid-Open Publication No. 2016-153906

### SUMMARY OF THE INVENTION

### Problem to be Solved by the Invention

However, the technique disclosed in Patent Document 1 merely enables individual terminal apparatuses to acquire related information corresponding to the identification information and does not envision collecting the identification information acquired by each of the terminal apparatuses to utilize the collected identification information collectively. It is an object of the present invention to provide a technique for utilizing information related to sounds received by each of terminal apparatuses for various purposes.

### Means of Solving the Problems

To solve the problems described above, an information processing method according to a preferred aspect of the present invention includes receiving, from each of a plurality of terminal apparatuses, a piece of voice information indicative of a sound that is output by a sound outputter and received by each terminal apparatus, and storing in a storage device pieces of voice information, each piece being received from a corresponding terminal apparatus.

An information processing apparatus according to a preferred aspect of the present invention includes a communication controller configured to cause a communicator to receive, from each of terminal apparatuses, a piece of voice information indicative of a sound that is output by a sound outputter and received by each terminal apparatus, and a storage controller configured to store in a storage device pieces of voice information, each piece being received from a corresponding terminal apparatus.

A program according to a preferred aspect of the present invention causes one or more processors to function as: a communication controller configured to cause a communicator to receive, from each of terminal apparatuses, a piece of voice information indicative of a sound that is output by a sound outputter and received by each terminal apparatus; and a storage controller configured to store pieces of voice information, each piece being from a corresponding terminal apparatus.

### BRIEF DESCRIPTION OF THE DRAWINGS

FIG. 1 is a block diagram illustrating a configuration of an information providing system according to a first embodiment.
FIG. 2 is a block diagram illustrating a configuration of a terminal apparatus.
FIG. 3 is a flowchart illustrating processing performed by a controller in the terminal apparatus.
FIG. 4 is a block diagram illustrating a configuration of a distributor.
FIG. 5 is a schematic diagram of a related table.
FIG. 6 is a schematic diagram of a voice table.
FIG. 7 is a flowchart illustrating processing of acquiring related information.
FIG. 8 is a flowchart illustrating processing of generating provision information.
FIG. 9 is a schematic diagram of a voice table according to a second embodiment.
FIG. 10 is a schematic diagram of a voice table according to a third embodiment.

### MODES FOR CARRYING OUT THE INVENTION

### First Embodiment

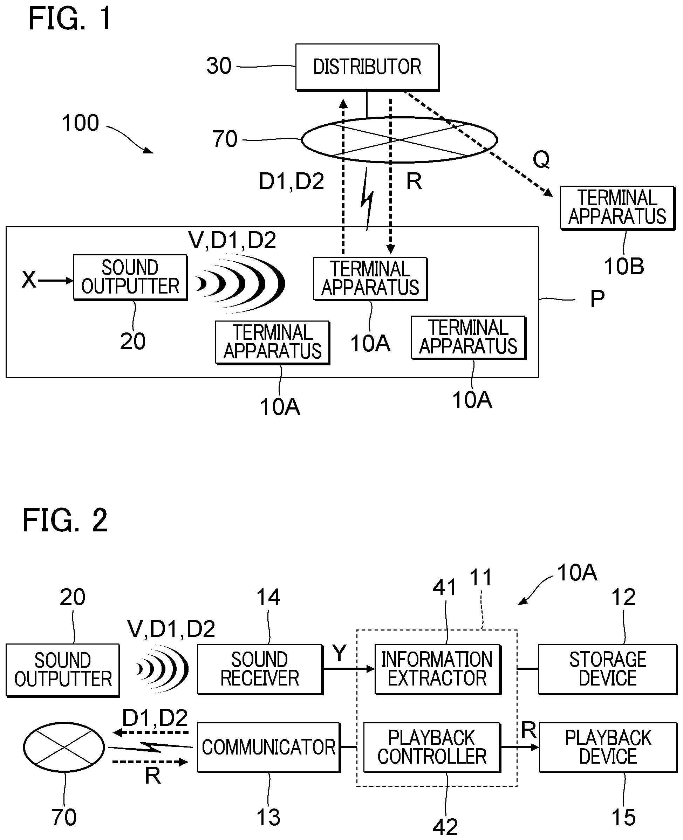

FIG. 1 is a block diagram illustrating a configuration of an information providing system 100 according to a first embodiment of the present invention. As illustrated in FIG. 1, the information providing system 100 according to the first embodiment includes terminal apparatuses 10A, a sound outputter 20, a distributor 30 (an example of an information processing apparatus), and a terminal apparatus 10B. The elements of the information providing system 100 are communicable with each other via a communication network 70, such as a mobile communication network or the Internet. The information providing system 100 is a computer system for providing users of the terminal apparatuses 10A and a user of the terminal apparatus 10B with various types of information. The terminal apparatuses 10A and the terminal apparatus 10B each are a portable information terminal apparatus, such as a mobile phone, a smartphone, a tablet, or a personal computer.

### Sound outputter 20

The sound outputter 20 is installed in a specific facility P. Specifically, the sound outputter 20 is an outputter that outputs a voice (speech) (hereinafter, "guidance voice") V for announcing various types of information to users of the facility P. For example, the facility P may be a transportation facility such as a train station or a bus station, a transport facility such as a train or a bus, a commercial facility such as a store or a restaurant, a lodging facility such as a Japanese-style inn or a hotel, an exhibition facility such as a museum or an art gallery, a tourist facility such as a historical site or a noted site, or a sporting facility such as a stadium or a gymnasium. The guidance voice V may announce shopping hours of the facility P, goods for sale in the facility P, or occurrence of an emergency situation (for example, a fire) in the facility P. The guidance voice V may be an in-vehicle announcement for an operation situation such as delay of a train, arrival of a train, precautions at the time of getting on and off in a vehicle (the facility P) such as a train or a bus. In actuality, the sound outputter 20 is installed in each of facilities and the guidance voice V (an example of a sound) is output in each facility. However, the following explanations focus on one facility P for convenience. The guidance voice V, which is output from the sound outputter 20, may be a sound based on a voice uttered by a worker of the facility P, or a sound prepared by speech synthesis or by a recording. For example, the sound outputter 20 may generate in real-time by using speech synthesis the guidance voice V representative of a character string in parallel to indication of the character string by a worker.

The sound outputter 20 according to the first embodiment outputs a sound representative of a piece of voice information D1, and a sound representative of a piece of position information D2, in addition to the guidance voice V. The piece of voice information D1 may indicates contents of a guidance voice V (for example, a character string representative of spoken contents of the guidance voice V). In the first embodiment, an identifier for identifying the guidance voice V is used as the piece of voice information D1. Different piece of voice information D1 are set in advance for respective guidance voices V.

The piece of position information D2 indicates a position (hereinafter, "sound output position") at which the sound outputter 20 outputs a sound. Different pieces of position information D2 are set in advance for respective guidance voices V. For example, the sound output position may be a name of the facility P in which the sound outputter 20 is installed, a region (for example, a division such as the Kanto region or the Kinki region) in which the facility P is located, or a geographical point, such as the latitude and the longitude of the facility P. The sound output position is not limited to information indicative of a geographical specific point and may be, for example, a floor number in the facility P or a specific place in the facility P. Alternatively, the piece of position information D2 may be a piece of information for identifying each sound outputter 20. In the first embodiment, an identifier for identifying the sound output position is used as the piece of position information D2.

The sound outputter 20 outputs the guidance voice V, the sound representative of the piece of voice information D1, and the sound representative of the piece of position information D2 in response to an audio signal X. The audio signal X is a signal representative of a sound including the guidance voice V, the sound representative of the piece of voice information D1, and the sound representative of the piece of position information D2. The sound outputter 20 according to the first embodiment functions as an audio device that plays back the guidance voice V and also functions as a transmitter that transmits the piece of voice information D1 and the piece of position information D2 to a surrounding area by sound communication using sound waves being air vibration as a transmission medium. That is, in the first embodiment, the sound outputter 20 outputs a sound including both the piece of voice information D1 and the piece of position information D2, in addition to the guidance voice V, thus transmitting the piece of voice information D1 and the piece of position information D2 to the surrounding area by sound communication. The piece of voice information D1 is transmitted each time the guidance voice V is output. For example, the piece of voice information D1 is transmitted in conjunction with output of the guidance voice V (for example, in parallel to or before/after output of the guidance voice V). Meanwhile, the piece of position information D2 is transmitted repetitively at predetermined time intervals regardless of output of the guidance voice V. The piece of position information D2 may be transmitted in conjunction with output of the guidance voice V. However, a period of transmission of the piece of voice information D1 and a period of transmission of the piece of position information D2 do not overlap.

The audio signal X is generated by adding both a modulated signal indicative of the piece of voice information D1 as a sound component and a modulated signal indicative of the piece of position information D2 as a sound component to a sound signal indicative of the guidance voice V. Each of the modulated signals is generated, for example, by modulating a predetermined frequency of a carrier wave with each piece information (the piece of voice information D1 or the piece of position information D2). The modulated signal may be generated by sequentially performing spread modulation of each piece of information using a spread code and frequency transform thereof using a carrier wave having a predetermined frequency. The frequency band of each of the modulated signals is set to a frequency band (for example, not lower than 18 kHz and not higher than 20 kHz) in which the sound outputter 20 can output sounds and the terminal apparatuses 10A can receive sounds and which is higher than a frequency band of sounds that the users of the terminal apparatuses 10A hear in normal environments. Therefore, the users hardly hear the sound components of the piece of voice information D1 and the piece of position information D2. However, the modulated signals may have a freely-selected frequency band and, for example, a modulated signal in an audible band may be generated.

### Terminal Apparatus 10A

The terminal apparatuses 10A in FIG. 1 are located in the facility P in which the sound outputter 20 is installed. A terminal apparatus 10A according to the first embodiment acquires a piece of information (hereinafter, "piece of related information") R related to the guidance voice V from the distributor 30. The piece of related information R is, for example, a character string representative of spoken contents of the guidance voice V, translated text obtained by translating the character string in the language of the guidance voice V into that in another language, or information indicative of a location of a site that shows contents related to the guidance voice V, for example, a URL (Uniform Resource Locator). The piece of related information R may express a sound or an image. There are also terminal apparatuses 10A in other facilities.

FIG. 2 is a block diagram illustrating a configuration of a terminal apparatus 10A. As illustrated in FIG. 2, the terminal apparatus 10A includes a controller 11, a storage device 12, a communicator 13, a sound receiver 14, and a playback device 15. As described above, the terminal apparatus 10A is typically an information terminal carried by a user. However, the terminal apparatus 10A may be an announcement display such as an electronic bulletin board installed in a transport facility or an electronic signage display (a digital signage display) installed in a commercial facility.

The sound receiver 14 includes an audio device (a microphone) that receives ambient sounds. Specifically, the sound receiver 14 receives a sound that is output from the sound outputter 20 in the facility P. The sound receiver 14 generates an audio signal Y indicative of the waveform of the sound. The audio signal Y generated based on the sound received in the facility P includes the sound component of the piece of voice information D1 and the sound component of the piece of position information D2. The piece of position information D2 can be rephrased as a piece of information indicative of the position of the terminal apparatus 10A, which has received the guidance voice V.

As will be understood from the above explanations, the sound receiver 14 is used for voice calls between terminal apparatuses 10A or to record a sound in shooting videos, and also functions as a receiver that receives the piece of voice information D1 and the piece of position information D2 by sound communication using sound waves being air vibration as a transmission medium. Illustrations of an A/D (analog/digital) converter that converts the audio signal Y generated by the sound receiver 14 from an analog form to a digital form are omitted for convenience. A sound receiver 14 that is separate from the terminal apparatus 10A may be connected to the terminal apparatus 10A in a wired or wireless manner, instead of the sound receiver 14 which is formed integrally with the terminal apparatus 10A.

The controller 11 includes a single processor or a plurality of processors such as a CPU (Central Processing Unit), and controls the elements of the terminal apparatus 10A in an integrated manner. The storage device 12 has stored therein a program executed by the controller 11 and various types of data used by the controller 11. For example, any known recording medium such as a semiconductor recording medium and a magnetic recording medium, or any combination of plural types of recording media is used as the storage device 12.

The controller 11 realizes functions (an information extractor 41 and a playback controller 42) by executing the program stored in the storage device 12 as illustrated in FIG. 2. Some of the functions of the controller 11 may be realized by dedicated electronic circuitry. A plurality of devices may include the functions of the controller 11.

The information extractor 41 extracts the piece of voice information D1 and the piece of position information D2 from the audio signal Y generated by the sound receiver 14. Specifically, the information extractor 41 extracts the piece of voice information D1 and the piece of position information D2, for example, by filtering processing to emphasize a frequency band including the sound component corresponding to each piece of information (the piece of voice information D1 and the piece of position information D2) in the audio signal Y and by demodulation processing corresponding to the modulation processing for each piece of information. The piece of voice information D1 extracted by the information extractor 41 is used to acquire the piece of related information R that corresponds to the guidance voice V corresponding to the piece of voice information D1 (that is, the guidance voice V output by the sound outputter 20).

The communicator 13 communicates with the distributor 30 via the communication network 70 under control of the controller 11. The communicator 13 according to the first embodiment transmits the piece of voice information D1 and the piece of position information D2 extracted by the information extractor 41 to the distributor 30. The distributor 30 acquires the piece of related information R corresponding to the piece of voice information D1 transmitted from the terminal apparatus 10A and transmits the acquired piece of related information R to the terminal apparatus 10A. The communicator 13 receives the piece of related information R transmitted from the distributor 30. Processing, which is performed by the distributor 30, to acquire the piece of related information R will be explained later. Practically, the piece of voice information D1 and the piece of position information D2 are transmitted from each of the terminal apparatuses 10A to the distributor 30.

The playback controller 42 causes the playback device 15 to play the related information R received by the communicator 13. The playback device 15 is an outputter that plays the piece of related information R. Specifically, the playback device 15 includes a display that displays an image represented by the piece of related information R, and a sound outputter that outputs sound represented by the piece of related information R. That is, playback performed by the playback device 15 includes display of an image and output of sound. Instead of the playback device 15 formed integrally with the terminal apparatus 10A, a playback device 15 that is separate from the terminal apparatus 10A may be connected to the terminal apparatus 10A in a wired or wireless manner. The playback device 15 may include either the display device or the sound outputter.

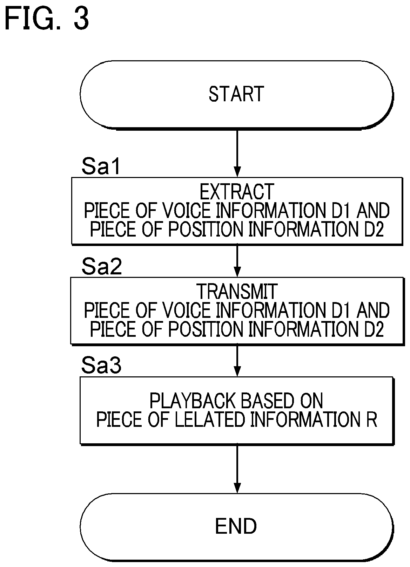

FIG. 3 is a flowchart illustrating processing performed by the controller 11 in the terminal apparatus 10A. The processing illustrated in FIG. 3 is repetitively performed, for example, at predetermined time intervals. When the processing in FIG. 3 is started, the information extractor 41 extracts the piece of voice information D1 and the piece of position information D2 from the audio signal Y generated by the sound outputter 14 (Sa1). The information extractor 41 transmits the extracted piece of voice information D1 and piece of position information D2 from the communicator 13 to the distributor 30 (Sa2). In a situation in which the piece of position information D2 is transmitted from the sound outputter 20 repetitively at predetermined time intervals, the controller 11 stores the recently received piece of position information D2 in the storage device 12 and transmits the stored piece of position information D2 to the distributor 30. The playback controller 42 causes the playback device 15 to play the piece of related information R transmitted from the distributor 30 (Sa3). With the processing described above, the piece of related information R, which corresponds to the guidance voice V and is output from the sound outputter 20, is provided to the user of the terminal apparatus 10A.

### Distributor 30

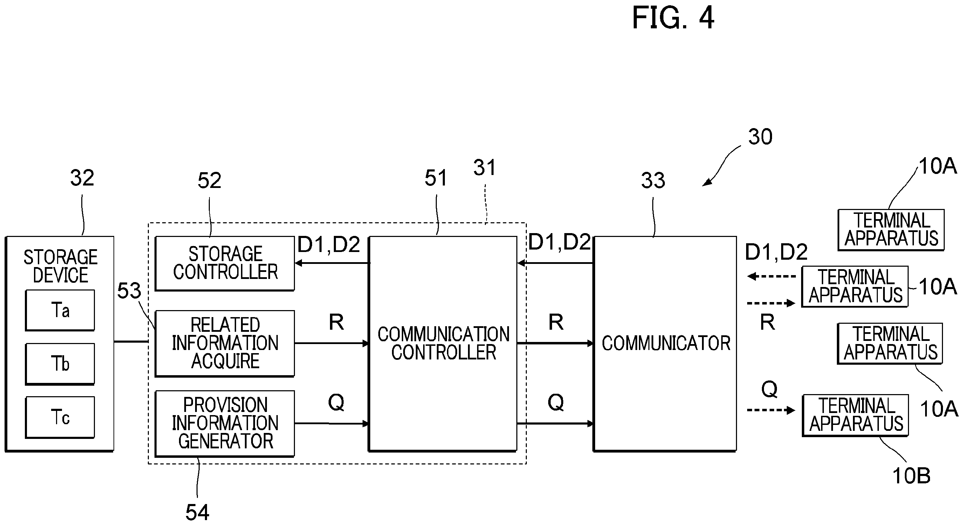

FIG. 4 is a block diagram illustrating a configuration of the distributor 30. The distributor 30 is a server (for example, a web server) that transmits various types of information to the terminal apparatuses 10A and the terminal apparatus 10B via the communication network 70. The piece of related information R corresponding to the piece of voice information D1 transmitted from each of the terminal apparatuses 10A is transmitted to the terminal apparatus 10A that has transmitted the piece of voice information D1. Meanwhile, information (hereinafter, "provision information") Q to be provided to a user of the terminal apparatus 10B is transmitted to the terminal apparatus 10B. As illustrated in FIG. 4, the distributor 30 according to the first embodiment includes a controller 31, a storage device 32, and a communicator 33. The distributor 30 is realized by a single apparatus or is realized by a set (that is, a server system) of apparatuses respectively constituted of different bodies.

The communicator 33 communicates with the terminal apparatuses 10A and the terminal apparatus 10B via the communication network 70 under control of the controller 31 (a communication controller 51). The communicator 33 according to the first embodiment receives the piece of voice information D1 and the piece of position information D2 from each of the terminal apparatuses 10A and transmits the piece of related information R to the terminal apparatus 10A. The communicator 33 also transmits the provision information Q to the terminal apparatus 10B.

The controller 31 includes one or a plurality of processors such as a CPU and controls the elements of the distributor 30 in an integrated manner. The storage device 32 has stored therein a program executed by the controller 11 and various types of data used by the controller 31. For example, any known recording medium such as a semiconductor recording medium and a magnetic recording medium, or any combination of plural types of recording media is used as the storage device 32. The storage device 32 according to the first embodiment stores a related table Ta, a voice table Tb, and a terminal table Tc therein.

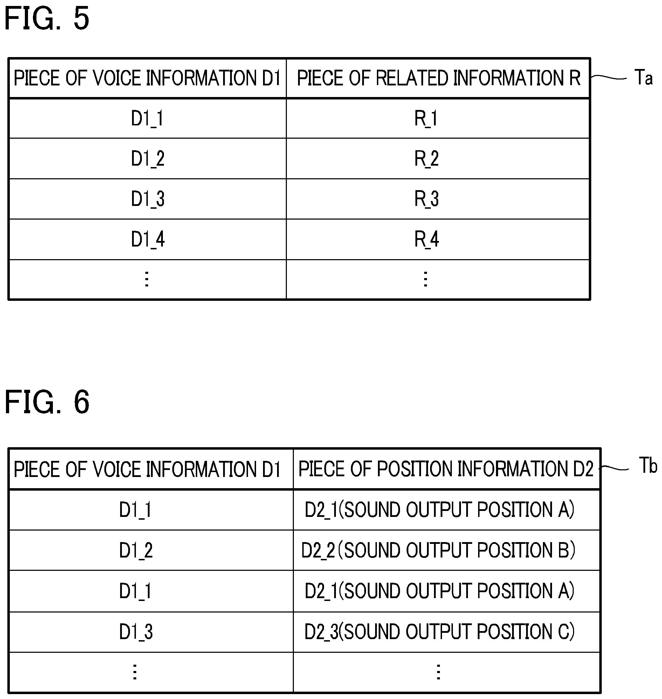

FIG. 5 is a schematic diagram of the related table Ta. As illustrated in FIG. 5, the related table Ta is a table in which pieces of related information R are registered. Specifically, with respect to each piece of voice information D1, the piece of related information R corresponding to the piece of voice information D1 is registered. For example, the piece of related information R, which represents a character string indicative of spoken contents of a specific guidance voice V or represents translated text obtained by translating the character string in one language into another language, is associated with the piece of voice information D1 corresponding to the specific guidance voice V.

FIG. 6 is a schematic diagram of the voice table Tb. As illustrated in FIG. 6, the voice table Tb is a data table in which pieces of voice information D1 respectively transmitted from the terminal apparatuses 10A are registered. Specifically, the pieces of voice information D1 and the piece of position information D2, received from each of the terminal apparatuses 10A, are registered in the voice table Tb in association with each other. Because pieces of voice information D1 are respectively transmitted from terminal apparatuses 10A positioned near sound output positions (A, B, C, ...) to the distributor 30, the pieces of voice information D1 corresponding to various guidance voices V are registered in the voice table Tb. That is, the voice table Tb is a set (big data) of pieces of voice information D1. The terminal table Tc is a table in which terminal apparatuses 10B (specifically, information for identifying the terminal apparatuses 10B), to which the provision information Q is to be transmitted, are registered. For example, when a user of a terminal apparatus 10B intends to acquire the provision information corresponding to a specific sound output position, the terminal apparatus 10B is registered in the terminal table Tc in response to an operation by the user to the terminal apparatus 10B. Alternatively, the terminal apparatus 10B may automatically (that is, without requiring an instruction from a user) transmit a request to register the terminal apparatus 10B on the terminal table Tc to the distributor 30, for example, with reception of the piece of voice information D1 as a trigger.

The control device 31 realizes functions (the communication controller 51, a storage controller 52, a related information acquirer 53, and a provision information generator 54) by executing the program stored in the storage device 12 as illustrated in FIG. 4. Some of the functions of the controller 11 may be realized by dedicated electronic circuitry. Alternatively, a plurality of devices may include the functions of the controller 31.

The communication controller 51 causes the communicator 33 to perform reception and transmission of various types of information. The storage controller 52 stores the piece of voice information D1 and the piece of position information D2 received by the communicator 33 in the storage device 32 (specifically, the voice table Tb). The related information acquirer 53 acquires the piece of related information R corresponding to the piece of voice information D1 received by the communicator 33. The provision information generator 54 generates the provision information Q using pieces of voice information D1 stored in the storage device 32.

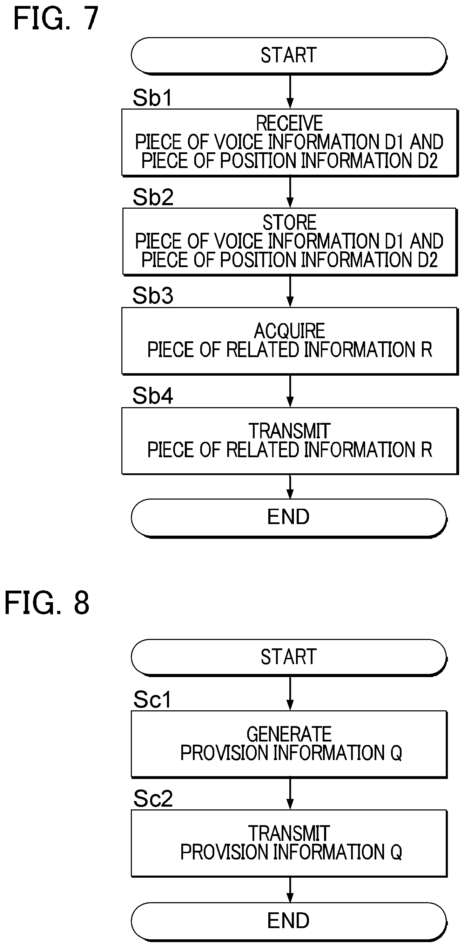

FIG. 7 is a flowchart of processing performed by the controller 31 to acquire the piece of related information R. When the processing illustrated in FIG. 5 is started, the communication controller 51 causes the communicator 33 to receive the piece of voice information D1 and the piece of position information D2 transmitted from a terminal apparatus 10A (Sb1). Practically, the piece of voice information D1 and the piece of position information D2 are transmitted from each of terminal apparatuses 10A positioned near sound output positions. The storage controller 52 stores the pieces of voice information D1 respectively received from the terminal apparatuses 10A in the storage device 32 (Sb2). Specifically, the storage controller 52 registers the piece of voice information D1 and the piece of position information D2 received from each of the terminal apparatuses 10A in the voice table Tb in association with each other. The related information acquirer 53 acquires the piece of related information R corresponding to the piece of voice information D1 received by the communicator 33 (Sb3). The related table Ta illustrated in FIG. 5 is used to acquire the piece of related information R. Specifically, the related information acquirer 53 identifies the piece of related information R associated with the piece of voice information D1 received by the communicator 33, from among the pieces of related information R registered in the related table Ta. The communication controller 51 causes the communicator 33 to transmit the piece of related information R identified by the related information acquirer 53 to the terminal apparatus 10A (Sb4). With the above processing, the piece of related information R that corresponds to the guidance voice V is transmitted to the terminal apparatus 10A that has received the guidance voice V output from the sound outputter 20.

FIG. 8 is a flowchart of processing performed by the controller 31 to generate the provision information Q. For example, the processing illustrated in FIG. 8 is performed at predetermined time intervals. The provision information generator 54 generates the provision information Q using a plurality of pieces of voice information D1 registered in the voice table Tb in FIG. 6 (Sc1). The communication controller 51 causes the communicator 33 to transmit the provision information Q generated by the provision information generator 54 to the terminal apparatuses 10B registered in the terminal table Tc (Sc2).

The provision information Q generated by the distributor 30 is explained below. In the following explanations, the provision information Q generated at the time of occurrence of an abnormal situation, such as an emergency situation or an urgent situation, is illustrated as an example. A situation is assumed in which a specific facility (for example, a transportation facility) is crowded due to occurrence of an emergency situation. In a situation shown as an example, trains are delayed due to occurrence of an accident involving a fatality or injury in a transportation facility (for example, a train station) and congestion consequently occurs. Each of many terminal apparatuses 10A that are located near the sound outputter 20 in the facility where the emergency situation has occurred receives a guidance voice V announcing occurrence of the emergency situation. Each of the terminal apparatuses 10A transmits the piece of voice information D1 corresponding to the guidance voice V and the piece of position information D2 indicative of the corresponding sound output position to the distributor 30. A large number of records (combinations), each record including a combination of the piece of position information D2 and the voice information D1, are registered in the voice table Tb in a short period of time, in which the piece of position information D2 indicates a sound output position that corresponds to the facility where the emergency situation has occurred, and in which the piece of voice information D1 corresponds to the guidance voice V announcing the occurrence of the emergency situation. Therefore, an occurrence of congestion can be presumed in accordance with the number of the records, and the cause of the congestion can be presumed based on the pieces of voice information D1.

In view of the above circumstances, the provision information generator 54 generates the provision information Q using the voice table Tb. Specifically, the provision information generator 54 counts the number (hereinafter, "registered number") N of records, which include the voice information D1 corresponding to the guidance voice V that announces the occurrence of an emergency situation and the piece of position information D2 that indicates the sound output position representing a facility in which the emergency situation is occurring, on the basis of the voice table Tb. The provision information generator 54 generates provision information Q that indicates the occurrence of the emergency situation, when the registered number N exceeds a threshold (that is, when the facility is crowded due to an emergency situation). The provision information Q according to contents of the guidance voice V indicated by the piece of voice information D1 of the records of which the registered number N exceeds the threshold is generated. For example, the provision information Q, which indicates that a train station is crowded due to a fatal accident or an injury, is generated.

In a situation in which the guidance voice V indicated by the piece of voice information D1 of the records of which the registered number N exceeds the threshold has contents announcing an emergency situation such as a fire, provision information Q that indicates a facility that is represented by the sound output position indicated by the piece of position information D2 of the records (that is, a facility at which the fire is occurring) may be generated, for example. Furthermore, provision information Q that indicates an evacuation route from the sound output position indicated by the piece of position information D2 may be generated. For example, an evacuation route associated with each of the sound output positions is stored in advance in the storage device 32 and is used to generate the provision information Q. As will be understood from the above explanations, the piece of position information D2 transmitted along with the piece of voice information D1 from each of the terminal apparatuses 10A is used to generate the provision information Q. In the first embodiment, provision information Q related to the piece of position information D2 indicative of a specific position (for example, a facility at which an emergency situation is occurring) is generated.

The registered number N is, for example, the total number of records (combinations of a piece of voice information D1 and a piece of position information D2) received from the terminal apparatuses 10A during a predetermined period (hereinafter, "reference period"). For example, in a configuration in which records received by the distributor 30 from the terminal apparatuses 10A in the reference period of a predetermined length from the current moment to the past are stored in the storage device 32, the total number of records stored in the storage device 32 is counted as the registered number N. In a configuration in which in the storage device 32 there are stored times at each of which the distributor 30 receives the piece of voice information D1 and the piece of position information D2 from each of the terminal apparatuses 10A, the total number of records having the reception time within the reference period among all records stored in the storage device 32 is counted as the registered number N.

As will be understood from the above explanations, the provision information generator 54 according to the first embodiment generates the provision information Q using two or more pieces of voice information D1, each of which is associated with the piece of position information D2 indicating a specific sound output position (for example, a crowded facility), among the pieces of voice information D1 registered in the voice table Tb. Specifically, the provision information Q according to contents of a guidance voice V indicated by the pieces of voice information D1 registered in the voice table Tb is generated. The provision information Q generated by the procedure described above is transmitted to the terminal apparatuses 10B registered in the terminal table Tc as described above.

Each terminal apparatus 10B plays the provision information Q transmitted from the distributor 30. Specifically, the terminal apparatus 10B plays the provision information Q, for example, by displaying a character string representing the provision information Q or outputting sound representing the provision information Q.

As will be understood from the above explanations, in the first embodiment, pieces of voice information D1 received from the terminal apparatuses 10A are stored in the storage device 32 (the voice table Tb). Therefore, the pieces of voice information D1 can be utilized for various purposes. Particularly in the first embodiment, the provision information Q generated using the pieces of voice information D1 stored in the storage device 32 is transmitted to the terminal apparatuses 10B. Therefore, the pieces of voice information D1 transmitted from the terminal apparatuses 10A can be utilized to generate the provision information Q. Furthermore, in the first embodiment, the provision information Q is generated from two or more pieces of voice information D1, each of which is associated with the piece of position information D2 indicating a specific position, among the pieces of voice information D1 stored in the storage device 32. Therefore, an advantage is obtained in that the provision information Q can be generated from two or more pieces of voice information D1 each indicating a guidance voice V that is presumed to have been received at a specific position.

### Second Embodiment

A second embodiment according to the present invention is explained. In each of the following embodiments, elements having functions identical to those of the first embodiment are denoted by reference signs used in the descriptions of the first embodiment and detailed descriptions of each element are omitted as appropriate.

The terminal apparatus 10A according to the second embodiment transmits a piece of time information D3 in addition to the piece of voice information D1 and the piece of position information D2 to the distributor 30. The piece of time information D3 indicates the time (typically, the date and hour) when the terminal apparatus 10A has received a guidance voice V. For example, the terminal apparatus 10A generates the piece of time information D3 indicative of the time counted in the terminal apparatus 10A at the time of reception of a guidance voice V. The piece of time information D3 may indicate the time at which the information extractor 41 has extracted the piece of voice information D1 corresponding to the guidance voice V. The piece of voice information D1 and the piece of position information D2 are transmitted from the sound outputter 20 in a manner similarly to the first embodiment.

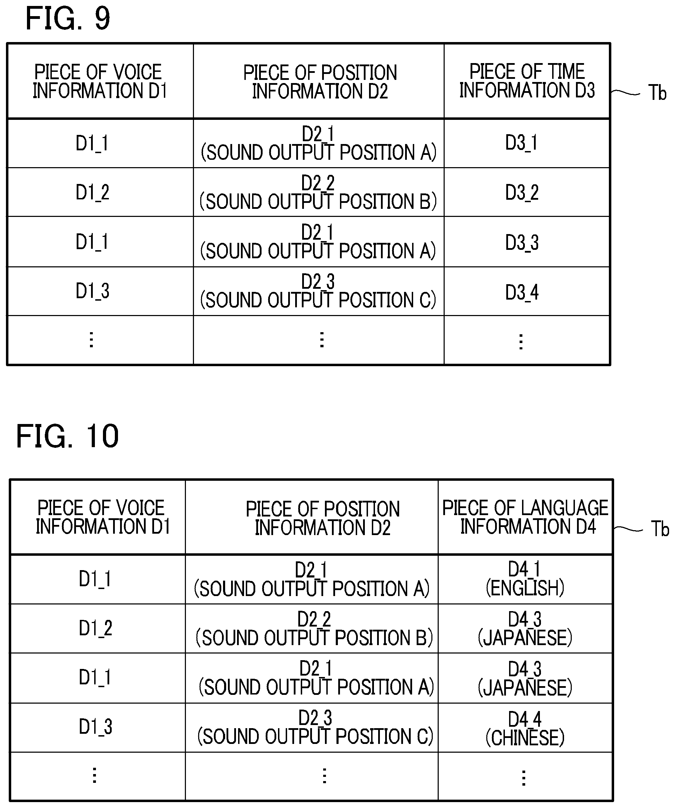

The communication controller 51 in the distributor 30 causes the communicator 33 to receive the piece of voice information D1, the piece of position information D2, and the piece of time information D3. The storage controller 52 registers the piece of voice information D1, the piece of position information D2, and the piece of time information D3 transmitted by each of the terminal apparatuses 10A in the voice table Tb. FIG. 9 is a schematic diagram of the voice table Tb according to the second embodiment. As illustrated in FIG. 9, the piece of voice information D1, the piece of position information D2, and the piece of time information D3 received from each of the terminal apparatuses 10A are associated with each other and are registered as one record.

The related information acquirer 53 according to the second embodiment acquires the piece of related information R by using the piece of voice information D1 transmitted from each of the terminal apparatuses 10A, and transmits the acquired piece of related information R to the terminal apparatus 10A similarly in the first embodiment. The provision information generator 54 according to the second embodiment generates the provision information Q using the pieces of voice information D1 stored in the storage device 32 similarly in the first embodiment.

The provision information Q generated by the distributor 30 according to the second embodiment is explained below. In the second embodiment, a situation in which the provision information Q announcing a situation of congestion (for example, the cause of the congestion and the degree of the congestion) in a specific facility is generated is illustrated as an example. As described above, terminal apparatuses 10A located near specific sound output positions respectively receive various guidance voices V, and the piece of voice information D1, the piece of position information D2, and the piece of time information D3 are transmitted to the distributor 30. Among the pieces of time information D3 associated in with the piece of position information D2 indicating a sound output position (for example, a sound output position representing a commercial facility) in the voice table Tb, a lot of the piece of time information D3 representing a time period (for example, morning/daytime/nighttime) in which the commercial facility is crowded is registered in a short time. Therefore, when the registered number N of records, which include both the piece of position information D2 indicating the sound output position that represents a specific commercial facility and the piece of time information D3, are calculated with respect to each time period, a time period in which the commercial facility is crowded can be anticipated.

In view of the above circumstances, the provision information generator 54 according to the second embodiment generates the provision information Q announcing the situation of congestion of a commercial facility using the pieces of voice information D1 registered in the voice table Tb. For example, the provision information generator 54 identifies records, which include the piece of position information D2 which indicates a sound output position representing a specific commercial facility, from the voice table Tb. Next, the provision information generator 54 classifies the identified records into time periods (morning/daytime/nighttime) using the time indicated by the piece of time information D3 in each of the records. The degree of congestion (for example, high/normal/low) in each time period is estimated on the basis of the registered number N of classified records, and the provision information Q representing the result of estimation is generated. The provision information Q represents the degree of congestion in each time period. The provision information Q representing the degree of congestion in each time period may be individually generated for each time period. As will be understood from the above explanations, the provision information Q corresponding to the number of pieces of voice information D1 classified into the time periods is generated. The piece of time information D3 is used to generate the provision information Q.

The provision information Q indicating the cause of congestion for each time period is generated based on contents of a guidance voice V indicated by the piece of voice information D1 classified into the time period. For example, when the registered number N of records including the piece of voice information D1 that indicates a guidance voice V announcing occurrence of various events (for example, limited-time offers) is large, the provision information Q indicating that the event is the cause of the congestion is generated. That is, the provision information Q according to the contents of guidance voices V is generated. The degree of congestion is not limited to the degree of congestion for each time period and may be, for example, the degree of congestion for each day of the week or each month. The provision information Q announcing the situation of congestion may be generated based on the piece of position information D2 and the piece of time information D3 without using the piece of voice information D1. The provision information Q generated by the above procedure is transmitted to the terminal apparatuses 10B registered in the terminal table Tc as described above.

As will be understood from the above explanations, the provision information generator 54 according to the second embodiment generates the provision information Q using two or more pieces of voice information D1 associated with the piece of time information D3 indicating a specific time (for example, a time period) among the pieces of voice information D1 registered in the voice table Tb. Also in the second embodiment, the pieces of voice information D1 stored in the storage device 32 can be utilized for various purposes (for example, generation of the provision information Q) similarly in the first embodiment. Particularly in the second embodiment, the provision information Q is generated from two or more pieces of voice information D1 associated with the piece of time information D3 indicating a specific time among the pieces of voice information D1 stored in the storage device 32. Therefore, there is an advantage that the provision information Q can be generated from two or more pieces of voice information D1 each indicating a guidance voice V that is presumed to have been received at a specific time.

While the terminal apparatuses 10A each generate the piece of time information D3 in the second embodiment, the distributor 30 may generate the piece of time information D3. For example, the piece of time information D3, which indicates the time at which the piece of voice information D1 and the piece of position information D2 have been received from the terminal apparatus 10A, is generated, and the piece of time information D3 is associated with the piece of voice information D1 and the piece of position information D2 transmitted from the terminal apparatus 10A. The piece of time information D3, the piece of voice information D1, and the piece of position information D2 are registered as one record in the voice table Tb.

### Third Embodiment

The terminal apparatus 10A according to a third embodiment transmits a piece of language information D4 to the distributor 30, in addition to the piece of voice information D1 and the piece of position information D2. The piece of language information D4 indicates a language set in the terminal apparatus 10A. The piece of language information D4 can be acquired by any method. For example, a configuration of generating the piece of language information D4 by referring to a language that is set in an OS (Operating System) of the terminal apparatus 10A, or a configuration of generating the piece of language information D4 indicating a language freely designated by a user of the terminal apparatus 10A, may be employed. The piece of voice information D1 and the piece of position information D2 are transmitted from the sound outputter 20, similarly to the first embodiment.

The communication controller 51 in the distributor 30 causes the communicator 33 to receive the piece of voice information D1, the piece of position information D2, and the piece of language information D4 transmitted by each of the terminal apparatuses 10A. The storage controller 52 registers the piece of voice information D1, the piece of position information D2, and the piece of language information D4 received by the communicator 33 in the voice table Tb. FIG. 10 is a schematic diagram of the voice table Tb according to the third embodiment. As illustrated in FIG. 10, the piece of voice information D1, the piece of position information D2, and the piece of language information D4 received from each of the terminal apparatuses 10A are registered as one record in association with each other.

The related information acquirer 53 according to the third embodiment acquires the piece of related information R by using the piece of voice information D1 transmitted from each of the terminal apparatuses 10A and transmits the acquired piece of related information R to the terminal apparatus 10A similarly in the first embodiment. The provision information generator 54 according to the third embodiment generates the provision information Q using the voice table Tb.

The provision information Q generated by the distributor 30 according to the third embodiment is explained below. In the third embodiment, a situation in which the provision information Q indicating a language that is used by a user positioned near a specific sound output position is generated, is illustrated as an example. When there are many users using a specific language (that is, terminal apparatuses 10A in which the specific language is set) near a sound output position, a large number of the pieces of language information D4, which are associated with the common piece of position information D2 indicating the sound output position, are registered in the voice table Tb in a short time. Therefore, when the registered number N of records that includes both the piece of position information D2 indicating a specific sound output position and the piece of language information D4 is calculated for each language, a language used by many users at the sound output position can be assumed.

In view of the above circumstances, the provision information generator 54 according to the third embodiment generates the provision information Q, which indicates a language used by many users at a specific sound output position, by using the pieces of voice information D1 registered in the voice table Tb. For example, the provision information generator 54 identifies records, which include the piece of position information D2 indicating a specific sound output position, from the voice table Tb. Next, the provision information generator 54 generates the provision information Q by classifying the identified records into languages using the piece of language information D4 in the records. For example, the number of persons using each language at a sound output position indicated by the piece of position information D2 of classified records is estimated according to the registered number N of the classified records, and the provision information Q indicating a language used by the greatest estimated number of persons is generated. That is, the provision information Q, which indicates a language that is presumed to be mostly used at a specific sound output position, is generated. In the third embodiment, a language, into which the number of the pieces of voice information D1 classified is greatest among the languages, is presumed to be mostly used at a specific sound output position. The piece of language information D4 is used to generate the provision information Q. The provision information Q indicating languages ranking high, in descending order of the number of classified records, may be generated.

In the third embodiment, an announcement display such as an electronic bulletin board installed at a transportation facility or an electronic signage display (a digital signage display) installed at a commercial facility is illustrated as an example of the terminal apparatuses 10B. The distributor 30 transmits the provision information Q to terminal apparatuses 10B positioned near the sound output position indicated by the piece of position information D2 corresponding to the piece of language information D4 used to generate the provision information Q (that is, the sound output position at which there are many users using the language indicated by the provision information Q) among the terminal apparatuses 10B registered in the terminal table Tc. The terminal apparatuses 10B display, for example, various types of information with the language that is indicated by the provision information Q transmitted from the distributor 30. That is, the information is displayed with the language used by many people near the sound outputter 20.

While the terminal apparatuses 10A generate the piece of language information D4 in the third embodiment, the sound outputter 20 may transmit the piece of language information D4 in addition to the piece of voice information D1 and the piece of position information D2 to the terminal apparatuses 10A. For example, a piece of information indicating the language used in a guidance voice V is transmitted as the piece of language information D4 to the terminal apparatuses 10A. The terminal apparatuses 10A transmit the piece of language information D4 transmitted from the sound outputter 20 to the distributor 30. In the above configuration, information about language used in the guidance voice V output from the sound outputter 20 can be collected.

As will be understood from the above explanations, the provision information generator 54 according to the third embodiment generates the provision information Q using two or more pieces of voice information D1 associated with the piece of language information D4 indicating a specific language among the pieces of voice information D1 registered in the voice table Tb. Also in the third embodiment, the pieces of voice information D1 stored in the storage device 32 can be utilized for various purposes (for example, generation of the provision information Q) similarly to the first embodiment. Particularly in the third embodiment, the piece of voice information D1 and the piece of language information D4 received from each of the terminal apparatuses 10A are stored in the storage device 32 in association with each other. Therefore, the piece of language information D4 can be utilized for various purposes.

### Modifications

Specific modified modes added to each of the aspects illustrated above are illustrated below. Aspects freely selected from the following descriptions may be combined with one another as appropriate so long as there is no conflict.
(1) In the embodiments described above, the provision information Q is generated using a plurality of pieces of voice information D1 stored in the storage device 32 (the voice table Tb). However, the plurality of pieces of voice information D1 stored in the storage device 32 are utilized for various purposes other than generation of the provision information Q. For example, the pieces of voice information D1 stored in the storage device 32 or the contents thereof may be utilized for various businesses (for example, marketing) in a situation in which a statistical analysis thereof is performed. Pieces of information (for example, at least one of the pieces of position information D2, the pieces of time information D3, and the pieces of language information D4) stored in the storage device 32, other than the pieces of voice information D1, may be utilized for the analysis. The voice table Tb may be provided as a searchable database. As will be understood from the above explanations, generation of the provision information Q may be omitted.
(2) The sound outputter 20 outputs a guidance voice V in the embodiments described above. However, a sound output from the sound outputter 20 is not limited to the guidance voice V. That is, a sound received by each of the terminal apparatuses 10A may be a sound other than the guidance voice V. For example, each of the terminal apparatuses 10A may receive a sound such as a musical sound (sounds of a musical piece being played) or a warning sound, and generate a piece of voice information D1 indicating the sound. The guidance voice V is an example of a sound.
(3) The identifier for identifying a guidance voice V is used as an example of the piece of voice information D1 in the embodiments described above. However, the piece of voice information D1 is not limited to the identifier. For example, a character string indicating spoken contents of the guidance voice V may be used as the piece of voice information D1. The information extractor 41 in the terminal apparatus 10A generates the piece of voice information D1 from the audio signal Y generated by the sound receiver 14 after reception of the guidance voice V. Specifically, the information extractor 41 identifies a character string representing the spoken contents of the guidance voice V as the piece of voice information D1 through sound recognition on the audio signal Y. Any known technique, such as recognition processing using an acoustic model such as an HMM (Hidden Markov Model) and a language model indicating linguistic restrictions, is used for the sound recognition on the audio signal Y. Each of the terminal apparatuses 10A transmits the piece of voice information D1 generated by sound recognition process to the distributor 30 and receives the piece of related information R corresponding to the piece of voice information D1 (that is, a character string representing the spoken contents of the guidance voice V) from the distributor 30. In a configuration in which each of the terminal apparatuses 10A generates the piece of voice information D1 by sound recognition process, the sound outputter 20 does not need to transmit a piece of voice information D1 to the terminal apparatuses 10A. That is, transmission of the piece of voice information D1 by the sound outputter 20 may be omitted. As will be understood from the above explanations, the piece of voice information D1 may be transmitted from the sound outputter 20 to the terminal apparatuses 10A or may be generated by each of the terminal apparatuses 10A after reception of the guidance voice V output from the sound outputter 20.
   The piece of voice information D1 may be information (for example, a URL) representing the location of information. As will be understood from the above illustrated example, the piece of voice information D1 is comprehensively expressed as a piece of information indicating a sound received by a terminal apparatus. Similarly, the piece of position information D2 is not limited to the identifier for identifying a sound output position. For example, the sound outputter 20 may transmit a character string (for example, the name of a facility) indicating a sound output position, or information (for example, a URL) representing the location of a site that stores contents indicative of the sound output position as the piece of position information D2 to the terminal apparatuses 10A.
(4) The piece of position information D2 and the piece of time information D3 illustrated in the embodiments described above are comprehensively expressed as a piece of situation information indicative of a situation of reception of a sound by each of the terminal apparatuses 10A. That is, the position at which a guidance voice V is received and the time at which the guidance voice V is received are illustrated as the situation of reception of a sound. The piece of situation information is not limited to the piece of position information D2 and the piece of time information D3. For example, any piece of situation information may be used as long as it is a piece of information generated or acquired by each of the terminal apparatuses 10A at the time of receiving the guidance voice V, such as an image taken by the terminal apparatus 10A, the position acquired using positioning satellites, for example, GPS (Global Positioning System) satellites, the moving speed, the usage status of an application, the browsing history of a web browser, or pushed information.
(5) Each of the terminal apparatuses 10A transmits the piece of voice information D1 and the piece of situation information to the distributor 30 in the first and second embodiments, and each of the terminal apparatuses 10A transmits the piece of voice information D1, the piece of situation information, and the piece of language information D4 to the distributor 30 in the third embodiment. However, the transmission of one or more pieces of information other than the piece of voice information D1 by each of the terminal apparatuses 10A may be omitted.
   The piece of information transmitted by each of the terminal apparatuses 10A in addition to the piece of voice information D1 is not limited to the piece of situation information and the piece of language information D4. For example, a terminal apparatus 10A that receives a guidance voice V announcing an occurrence of an emergency situation (for example, a fire) may also receive a sound (for example, a siren) other than the guidance voice V in addition to the guidance voice V. In the above circumstances, a piece of information (hereinafter, "piece of classification information") indicating classification of the sound received in addition to the guidance voice V by the terminal apparatus 10A may be transmitted in addition to the piece of voice information D1 to the distributor 30. For example, a piece of classification information indicating a siren that announces an emergency situation, or a piece of classification information indicating an abnormal sound such as an explosion sound and an impact sound is used. Any known technique is used to generate the piece of classification information. For example, the piece of classification information is generated based on an analysis of the audio signal Y. Each of the terminal apparatuses 10A transmits the piece of voice information D1 and the piece of classification information to the distributor 30 and then the distributor 30 (the storage controller 52) associates the received piece of voice information D1 and piece of classification information with each other to be stored in the storage device 32. Each of the terminal apparatuses 10A may transmit the audio signal Y including a sound other than the guidance voice V in addition to the piece of voice information D1 to the distributor 30, and then the distributor 30 may generate the piece of classification information by analyzing the audio signal Y. Alternatively, a piece of information (for example, a piece of identification information) related to the sound outputter 20 being a sound outputting source of the guidance voice V received by the terminal apparatuses 10A may be transmitted from each of the terminal apparatuses 10A in addition to the piece of voice information D1.
(6) Pieces of voice information D1 are used to generate the provision information Q in the first and second embodiments. However, the provision information Q may be generated without using pieces of voice information D1. For example, the provision information Q may be generated only using the piece of situation information. For example, the provision information Q indicating the degree of congestion for each of sound output positions may be generated based on the number of pieces of position information D2 indicating the sound output position registered in the voice table Tb.
(7) The piece of voice information D1 can be received at a limited specific sound output position at which the guidance voice V corresponding to the piece of voice information D1 is receivable. Accordingly, the piece of voice information D1 may also be expressed as a piece of information indicating the sound output position. Therefore, usage of the piece of position information D2 transmitted from each of the terminal apparatuses 10A in generation of the provision information Q illustrated in the embodiments described above is not essential. That is, transmission of the piece of position information D2 from the sound outputter 20 may be omitted.
   Each of the terminal apparatuses 10A may acquire an accurate piece of position information D2 of the terminal apparatus 10A by using radio waves from positioning satellites (for example, GPS satellites), and transmit the accurate piece of position information D2 in addition to the piece of voice information D1. Both the piece of position information D2 determined on the basis of satellite waves and the piece of position information D2 received from the sound outputter 20 by sound communication may be registered in the voice table Tb. There is a semantic difference in that the piece of position information D2 determined on the basis of satellite waves indicates the absolute position of the terminal apparatus 10A whereas the piece of position information D2 received by sound communication indicates a sound output position. For example, assuming a situation in which a terminal apparatus 10A is positioned in a moving body such as a train, the absolute position indicated by the piece of position information D2 determined on the basis of satellite waves changes in accordance with movement of the moving body whereas the sound output position indicated by the piece of position information D2 received by audio communication does not change.
   Alternatively, highly accurate piece of position information D2 (hereinafter, "high-accuracy piece of position information D2") generated by a telecommunication carrier that manages the communication network 70 to which the terminal apparatuses 10A are connected may be used to generate the provision information Q. For example, the high-accuracy piece of position information D2 corresponding to a position at which a terminal apparatus 10A is positioned at a time indicated by the piece of time information D3 that is added to the piece of voice information D1 is registered in the voice table Tb in association with the piece of voice information D1. In the above configuration, the high-accuracy piece of position information D2 generated by the telecommunication carrier can be used with the pieces of voice information D1. As will be understood from the above explanations, transmission of the piece of position information D2 to the distributor 30 may be omitted in the embodiments described above. The provision information Q may be generated based on the high-accuracy pieces of position information D2 in the voice table Tb. For example, the provision information Q may be generated from the voice table Tb in consideration of a movement tendency of many terminal apparatuses 10A indicated by the high-accuracy piece of position information D2.
(8) The provision information Q is generated using the pieces of voice information D1 in the embodiments described above. However, usage of the pieces of voice information D1 in generation of the provision information Q is not essential. That is, the provision information Q may be generated using one piece of voice information D1. For example, when the piece of voice information D1 corresponding to a guidance voice V announcing an emergency situation is transmitted from a terminal apparatus 10A to the distributor 30, the provision information Q announcing the emergency situation may be generated using the piece of voice information D1. In the above configuration, the distributor 30 functions as an element that transmits the provision information Q generated by using the piece of voice information D1 to the terminal apparatuses 10B. The difference between the terminal apparatus 10A and the terminal apparatus 10B does not matter.
(9) The distributor 30 transmits the piece of related information R to each of the terminal apparatuses 10A in the embodiments described above. However, transmission of the piece of related information R to each of the terminal apparatuses 10A may be omitted. That is, each of the terminal apparatuses 10A may be used as information terminal apparatus that collects the piece of voice information D1 and transmits the piece of voice information D1 to the distributor 30.
(10) The provision information Q is transmitted to the terminal apparatus 10B registered in the terminal table Tc in the embodiments described above. However, the provision information Q may be transmitted to at least one terminal apparatus 10A among the terminal apparatuses 10A in the information provision system 100. The provision information Q may be provided to an operator of a facility P in which the sound outputter 20 is installed. For example, the provision information generator 54 generates the provision information Q that indicates an increasing tendency of pieces of voice information D1 indicating a specific guidance voice V (for example, a guidance voice V output in the facility P). For example, the provision information Q is generated when pieces of voice information D1 corresponding to piece of position information D2 indicating the facility P among pieces of voice information D1 registered in the voice table Tb increase in a short time (for example, when the registered number exceeds a predetermined threshold). For example, provision information Q announcing an increase in the registered number of the pieces of voice information D1 indicating a specific guidance voice V, or provision information Q announcing the registered number of the pieces of voice information D1, is generated. The generated provision information Q is transmitted to an information terminal apparatus used by the operator of the facility P. The information terminal apparatus used by the operator is, for example, a controller that controls the sound outputter 20. The information terminal apparatus estimates the situation of congestion (for example, the degree of congestion) in the facility P on the basis of the increasing tendency of the pieces of voice information D1 indicated by the provision information Q that is received from the distributor 30. Next, the information terminal apparatus causes the sound outputter 20 to output, at a predetermined timing, a guidance voice V for guiding users of the facility P to a place at which the degree of congestion is low on the basis of the estimated situation of congestion conditions.
(11) In the embodiments described above, the pieces of voice information D1 transmitted by each of the terminal apparatuses 10A to acquire the piece of related information R is stored in the storage device 32 (the voice table Tb). However, a piece of voice information D1 transmitted from the terminal apparatus 10A at a timing different from a timing at which the piece of voice information D1 has been transmitted to acquire the piece of related information R from the terminal apparatus 10A may be stored in the storage device 32. Upon reception of a guidance voice V, the terminal apparatus 10A transmits the piece of voice information D1 to the distributor 30 to acquire the piece of related information R. Thereafter, the terminal apparatus 10A transmits the piece of voice information D1 (and other information) that is to be stored in the storage device 32 (the voice table Tb), to the distributor 30. For example, a plurality of pieces of voice information D1 may be transmitted collectively at a predetermined time.
(12) The piece of voice information D1 transmitted from each of the terminal apparatuses 10A is stored in the distributor 30 (the voice table Tb) in the embodiments described above. However, the voice table Tb (the piece of voice information D1) may be stored in an information processing apparatus different from the distributor 30. Each of the terminal apparatuses 10A transmits the piece of voice information D1 to each of the distributor 30 and the information processing apparatus. The distributor 30 has stored therein the related table Ta and transmits the piece of related information R corresponding to the piece of voice information D1 to each of the terminal apparatuses 10A. Meanwhile, a storage device in the information processing apparatus stores therein the voice table Tb including the pieces of voice information D1 received from each of the terminal apparatuses 10A. The provision information Q is transmitted from the information processing apparatus to the terminal apparatus 10B. In the above configuration, the piece of voice information D1 may be transmitted to the information processing apparatus at any timing. For example, the piece of voice information D1 may be transmitted to the information processing apparatus at the same time as transmission of the piece of voice information D1 to the distributor 30, or the pieces of voice information D1 may be transmitted collectively at a predetermined time. The piece of voice information D1 and information (for example, the piece of situation information or the piece of language information D4) other than the piece of voice information D1 may be transmitted to the information processing apparatus.
(13) The related information acquirer 53 acquires the piece of related information R corresponding to the piece of voice information D1 from the related table Ta in the embodiments described above. However, the related information acquirer 53 may generate the piece of related information R. For example, on the basis of the piece of voice information D1 indicating a character string that represents spoken contents of a guidance voice V, the piece of related information R corresponding to the character string is generated. That is, storing the related table Ta in the storage device 32 is not essential.
(14) Each of the terminal apparatuses 10A transmits the piece of voice information D1 to the distributor 30 in the embodiments described above. However, the transmission source of the piece of voice information D1 is not limited to each of the terminal apparatuses 10A. For example, the sound outputter 20 may transmit the piece of voice information D1 to the distributor 30. The sound outputter 20 transmits the piece of voice information D1 to the distributor 30 in conjunction with output of the guidance voice V and a sound based on the piece of voice information D1. In parallel to or before/after output of the guidance voice V, the piece of voice information D1 is transmitted to the distributor 30. The piece of voice information D1 is transmitted to the distributor 30 from the sound outputter 20 installed in each of facilities P. The distributor 30 stores the pieces of voice information D1 received from each of the sound outputters 20 in the storage device 32. Alternatively, for example, a device managed in a facility P, instead of the distributor 30, may transmit the piece of voice information D1 corresponding to a guidance voice V output from the sound outputter 20 to the distributor 30.
(15) The voice table Tb illustrated in the embodiments described above is also recognized as a data structure. That is, the voice table Tb has a data structure including pieces of voice information D1 each indicating contents of a sound output from the sound outputter 20 and received by the terminal apparatuses 10A. The voice table Tb is used in processing performed by the distributor 30 (an example of the information processing apparatus) to generate the provision information Q using the pieces of voice information D1 included in the data structure.
(16) The program that causes the controller 11 in the terminal apparatus 10A to function as the information extractor 41 and the playback controller 42 may be single application software or may be provided as, for example, plug-in software for various types of application software (for example, browsers) used in the terminal apparatus 10A.
(17) The functions of the distributor 30 or the terminal apparatuses 10 (10A and 10B) according to each of the embodiments described above are realized by cooperation of a program and the controller 31 as illustrated in each embodiment. The program according to each embodiment described above may be provided in a form of being stored in a computer readable recording medium, and installed in a computer. The recording medium is, for example, a non-transitory recording medium. While an optical recording medium (an optical disk) such as a CD-ROM is a preferred example of the recording medium, it also includes a recording medium of any known form, such as a semiconductor recording medium or a magnetic recording medium. The non-transitory recording medium includes any recording medium except for a transitory, propagating signal and does not exclude a volatile recording medium. Furthermore, it is also possible to provide the program to a computer in a mode of distributing the program via a communication network.

### Supplementary notes:

For example, the following configurations can be understood based on the embodiments exemplified above.

An information processing method according to a preferred aspect (a first aspect) of the present invention includes receiving, from each of a plurality of terminal apparatuses, a piece of voice information indicative of a sound that is output by a sound outputter and received by each terminal apparatus; and storing in a storage device pieces of voice information, each piece being received from a corresponding terminal apparatus. In this aspect, the pieces of voice information respectively received from the terminal apparatuses are stored in the storage device. Therefore, the pieces of voice information can be utilized for various purposes.

A preferred example (a second aspect) of the first aspect further includes generating provision information using the pieces of voice information stored in the storage device; and transmitting the provision information to a terminal apparatus. In this aspect, the provision information generated using the pieces of voice information stored in the storage device is transmitted to the terminal apparatus. Therefore, the pieces of voice information respectively transmitted from the terminal apparatuses can be utilized for generation of the provision information.

In a preferred example (a third aspect) of the first or second aspect, the provision information is transmitted to at least one of the terminal apparatuses in the transmitting of the provision information. In this aspect, the provision information is transmitted to a terminal apparatus being a transmission source of the piece of voice information.

In a preferred example (a fourth aspect) of the third aspect, the provision information is information generated in accordance with contents of the sound indicated by the pieces of voice information. In this aspect, the provision information generated in accordance with contents of the sound received by terminal apparatuses can be generated.

A preferred example (a fifth aspect) of any one of the second to fourth aspects includes receiving, from each of the plurality of terminal apparatuses, a piece of situation information indicative of a situation in which the sound is received at each terminal apparatus, storing in the storage device the piece of voice information and the piece of situation information in association with each other, the piece of voice information and the piece of situation information being received from each terminal apparatus, and generating the provision information using, from among the pieces of voice information stored in the storage device, two or more pieces of voice information that are associated with a piece of situation information indicative of a specific situation. In this aspect, the provision information is generated from the two or more pieces of voice information associated with the piece of situation information indicating the specific situation from among the pieces of voice information stored in the storage device. Therefore, the provision information can be generated from the two or more pieces of voice information each indicating a sound that is presumed to have been received in the specific situation.

In a preferred example (a sixth aspect) of the fifth aspect, the piece of situation information includes a piece of position information indicating, as the situation, a position where a corresponding one of the plurality of terminal apparatuses is located when receiving the sound, and the provision information is generated by using, from among the pieces of voice information stored in the storage device, two or more pieces of voice information that are associated with a piece of position information indicative of a specific position. In this aspect, the provision information is generated from the two or more pieces of voice information, which are associated with the piece of position information indicating a specific position, among the pieces of voice information stored in the storage device. Therefore, the provision information can be generated from the two or more pieces of voice information each indicating a sound that is presumed to have been received at the specific position.

In a preferred example (a seventh aspect) of the sixth aspect, the provision information related to the specific position is generated when the number of the pieces of voice information associated with the piece of position information indicative of the specific position exceeds a threshold. When the number of the pieces of voice information associated with the piece of position information indicating the specific position exceeds the threshold, it is presumed that there are many users of terminal apparatuses at the position. Therefore, the provision information related to the position at which there are many users can be generated.

In a preferred example (an eighth aspect) of any one of the fifth to seventh aspects, the piece of situation information includes a piece of time information indicating, as the situation, a time at which the sound is received, and the provision information is generated using, from among the pieces of voice information stored in the storage device, two or more pieces of voice information that are associated with a piece of time information indicating a specific time. In this aspect, the provision information is generated from the two or more pieces of voice information associated with the piece of time information indicating the specific time among the pieces of voice information stored in the storage device. Therefore, the provision information can be generated from the two or more pieces of voice information each indicating a sound that is presumed to have been received at the specific time.

A preferred example (a ninth aspect) of the eighth aspect includes classifying the pieces of voice information into a plurality of time periods using the pieces of time information, each piece of time information being associated with the piece of voice information. The provision information is generated in accordance with the number of pieces of voice information for at least one of the time periods. For example, on the basis of the number of the pieces of voice information classified into each time period, the number of users positioned near a sound outputter can be estimated for each corresponding time period. Therefore, for example, the provision information indicating the situation of congestion for each time period can be generated.

A preferred example (a tenth aspect) of any one of the first to ninth aspects includes receiving, from each of the terminal apparatuses, a piece of language information indicative of a language set in each terminal apparatus; and storing in the storage device the piece of voice information and the piece of language information in association with each other, the piece of voice information and the piece of language information being received from each terminal apparatus. In this aspect, the piece of language information and the piece of voice information, which are received from each of the terminal apparatuses, are stored in the storage device in association with each other. Therefore, the piece of language information, which indicates a language set in each of the terminal apparatuses that has received the sound, can be utilized for various purposes.

A preferred example (an eleventh aspect) of the tenth aspect includes classifying the pieces of voice information into a plurality of languages using pieces of language information, each piece of language information being associated with the piece of voice information. The provision information is generated that indicates a language, into which a greatest number of pieces of voice information are classified, from among the plurality of languages. A language, into which the number of the pieces of voice information classified is greatest, among the languages can be presumed to be a language mostly used near a sound output position. Therefore, the provision information indicating the language mostly used near the sound output position can be generated.

In a preferred example (a twelfth aspect) of any one of the first to tenth aspects, the receiving, from each of the terminal apparatuses, the piece of voice information includes receiving the piece of voice information generated by each of the terminal apparatuses from an audio signal generated based on the sound that is output from the sound outputter. In this aspect, each of the terminal apparatuses generates the piece of voice information on the basis of a sound output from a sound outputter. Therefore, the configuration of the sound outputter is simplified as compared to a configuration in which a sound outputter transmits the piece of voice information to terminal apparatuses.

An information processing apparatus according to a preferred aspect (a thirteenth aspect) of the present invention includes a communication controller configured to cause a communicator to perform an operation to receive, from each of a plurality of terminal apparatuses, a piece of voice information indicative of a sound that is output by a sound outputter and received by each terminal apparatus; and a storage controller configured to store in a storage device pieces of voice information, each piece being received from a corresponding terminal apparatus. In this aspect, the pieces of voice information respectively received from terminal apparatuses are stored in the storage device. Therefore, the pieces of voice information can be utilized for various purposes.

A program according to a preferred aspect (a fourteenth aspect) of the present invention causes one or more processors to function as a communication controller configured to cause a communicator to perform an operation to receive, from each of a plurality of terminal apparatuses, a piece of voice information indicative of a sound that is output by a sound outputter and received by each terminal apparatus; and a storage controller configured to store in a storage device pieces of voice information, each piece being received from a corresponding terminal apparatus. In this aspect, the pieces of voice information respectively received from terminal apparatuses are stored in the storage device. Therefore, the pieces of voice information can be utilized for various purposes.

A data structure according to a preferred aspect (a fifteenth aspect) of the present invention is a data structure including pieces of voice information each indicating contents of a sound output from a sound outputter and received by each of terminal apparatus, and is used for processing performed by an information processing apparatus to generate provision information using the pieces of voice information. In this aspect, the pieces of voice information included in the data structure are utilized to generate the provision information. Therefore, the pieces of voice information respectively transmitted from terminal apparatuses can be utilized to generate the provision information.

### Description of Reference Signs

100...information providing system, 10...terminal apparatus, 20... sound outputter, 30... distributor, 11...controller, 12... storage device, 13...communicator, 14... sound receiver, 15...playback device, 31...controller, 32... storage device, 33...communicator, 41...information extractor, 42... playback controller, 51... communication controller, 52... storage controller, 53...related information acquirer, 54...provision information generator, 70...communication network.

## Claims

1. An information processing method implemented by a computer, the method comprising:
receiving, from each of a plurality of terminal apparatuses, a piece of voice information indicative of a sound that is output by a sound outputter and received by each terminal apparatus; and
storing in a storage device pieces of voice information, each piece being received from a corresponding terminal apparatus.

2. The information processing method according to claim 1, further comprising:
generating provision information using the pieces of voice information stored in the storage device; and
transmitting the provision information to a terminal apparatus.

3. The information processing method according to claim 2, wherein the transmitting of the provision information comprises transmitting the provision information to at least one of the plurality of terminal apparatuses.

4. The information processing method according to claim 2 or 3, wherein the provision information is information generated in accordance with contents of the sound indicated by the pieces of voice information.

5. The information processing method according to any one of claims 2 to 4, further comprising:
receiving, from each of the plurality of terminal apparatuses, a piece of situation information indicative of a situation in which the sound is received at each terminal apparatus;
storing in the storage device the piece of voice information and the piece of situation information in association with each other, the piece of voice information and the piece of situation information being received from each terminal apparatus; and
generating the provision information using, from among the pieces of voice information stored in the storage device, two or more pieces of voice information that are associated with a piece of situation information indicative of a specific situation.

6. The information processing method according to claim 5, wherein:
the piece of situation information includes a piece of position information indicating, as the situation, a position where a corresponding one of the plurality of terminal apparatuses is located when receiving the sound, and
the generating of the provision information comprises generating the provision information using, from among the pieces of voice information stored in the storage device, two or more pieces of voice information that are associated with a piece of position information indicative of a specific position.

7. The information processing method according to claim 6, wherein the generating of the provision information comprises generating the provision information related to the specific position when a number of the pieces of voice information associated with the piece of position information indicative of the specific position exceeds a threshold.

8. The information processing method according to any of claims 5 to 7, wherein:
the piece of situation information includes a piece of time information indicating, as the situation, a time at which the sound is received, and
the generating of the provision information comprises generating the provision information using, from among the pieces of voice information stored in the storage device, two or more pieces of voice information that are associated with a piece of time information indicative of a specific time.

9. The information processing method according to claim 8, further comprising:
classifying the pieces of voice information into a plurality of time periods using pieces of time information, each piece of time information being associated with the piece of voice information;
wherein the generating of the provision information comprises generating the provision information in accordance with a number of pieces of voice information for at least one of the time periods.

10. The information processing method according to any of claims 1 to 9, further comprising:
receiving, from each of the terminal apparatuses, a piece of language information indicative of a language set in each terminal apparatus; and
storing in the storage device the piece of voice information and the piece of language information in association with each other, the piece of voice information and the piece of language information being received from each terminal apparatus.

11. The information processing method according to claim 10, further comprising:
classifying the pieces of voice information into a plurality of languages using pieces of language information, each piece of language information being associated with the piece of voice information,
wherein the generating of the provision information comprises generating the provision information indicative of a language, into which a greatest number of pieces of voice information are classified, from among the plurality of languages.

12. The information processing method according to any of claims 1 to 11, wherein the receiving, from each of the terminal apparatuses, the piece of voice information comprises receiving the piece of voice information generated by each terminal apparatus from an audio signal generated based on the sound that is output from the sound outputter.

13. An information processing apparatus comprising:
a communication controller configured to cause a communicator to perform an operation to receive, from each of a plurality of terminal apparatuses, a piece of voice information indicative of a sound that is output by a sound outputter and received by each terminal apparatus; and
a storage controller configured to store in a storage device pieces of voice information, each piece being received from a corresponding terminal apparatus.

14. A program for causing one or more processors to function as:
a communication controller configured to cause a communicator to perform an operation to receive, from each of a plurality of terminal apparatuses, a piece of voice information indicative of a sound that is output by a sound outputter and received by each terminal apparatus; and
a storage controller configured to storing in a storage device pieces of voice information, each piece being received from a corresponding terminal apparatus.
